# FASCICULE DE BREVET EUROPEEN

(11) **EP 3 134 778 B1**
(45) Date de publication et mention de la délivrance du brevet: **06.11.2019**
(21) Numéro de dépôt: 15725746.0
(22) Date de dépôt: 16.04.2015
(51) Int. Cl.: F24F 11/30, F24F 11/62

(54) **DISPOSITIF ET UN SYSTÈME DE COMMANDE ET/OU DE CONTRÔLE**
VORRICHTUNG UND SYSTEM FÜR STEUERUNG UND/ODER BEFEHL
DEVICE AND A SYSTEM FOR CONTROL AND/OR COMMAND

(30) Priorité: 25.04.2014 FR 1453728
(43) Date de publication de la demande: 01.03.2017
(73) Titulaire: SOMFY ACTIVITES SA, 74300 Cluses (FR)
(72) Inventeur: MIGNOT, Pierre, F-05380 Chateauroux-les-alpes (FR); CAVAREC, Pierre Emmanuel, F-74130 Mont Saxonnex (FR)
(74) Mandataire: Verriest, Philippe
(86) Numéro de dépôt international: PCT/FR2015/051030
(87) Numéro de publication internationale: WO 2015/162360

(56) Documents cités:
- EP-A1- 0 437 993
- WO-A1-2006/082939
- WO-A2-2007/027632
- US-A1- 2010 106 809
- US-A1- 2013 083 012

## Description

La présente invention concerne un dispositif, un système et une installation de commande et/ou de contrôle d'au moins un élément de confort visuel ou thermique ou de sécurité du bâtiment.

Il est connu de disposer d'un système de commande et/ou de contrôle comprenant une entité centrale et une pluralité de points de commande d'actionneurs d'équipements du bâtiment.

Le document US 2010/106809 décrit un réseau HVAC pourvu d'un système de gestion et d'échange de données entre les différents éléments du système, notamment pour réaliser un diagnostic de l'état du système d'alarme.

Le document US 2013/083012 décrit un système de gestion d'informations d'appareils d'un bâtiment, le système comprenant notamment un affichage agencé pour représenter un schéma de l'intérieur du bâtiment et de l'état des appareils.

L'entité centrale est agencée pour contrôler, c'est-à-dire au moins récolter un ensemble de données relatives au confort visuel ou thermique, à la consommation énergétique ou la sécurité du bâtiment, et éventuellement commander, c'est-à-dire élaborer et/ou transmettre un ordre de commande d'un actionneur. Chaque point de commande peut également fonctionner de manière indépendante et élaborer des ordres de commande à destination de l'actionneur avec lequel ledit point de commande est associé ou appairé.

Dans ces conditions, chaque point de commande peut disposer d'un écran agencé pour afficher les données à disposition du point de commande. Typiquement, il s'agit des ordres de commande envoyés à l'actionneur associé, la réponse de l'actionneur à cet ordre de commande envoyée au point de commande et éventuellement une valeur de mesure reçue d'un capteur associé au point de commande.

Ces dispositions donnent satisfaction en ce que l'utilisateur peut connaître les données relatives à chaque point de commande. Toutefois, l'utilisateur doit se déplacer de point de commande en point de commande pour connaître toutes les données l'intéressant ou configurer les associations complexes entre les différentes sources d'information et le point de commande disposant d'un écran.

Une autre solution consiste à transmettre toutes les données relatives au confort visuel ou thermique, à la consommation électrique ou la sécurité du bâtiment à destination d'un terminal de communication mobile, comme un téléphone ou une tablette. Cette disposition donne satisfaction en ce que toutes les données sont accessibles à l'utilisateur. Equiper toutes les pièces avec un terminal disposé à un emplacement fixe et visible d'une pièce pour y afficher les informations relatives à cette pièce parait également couteux et peu approprié. Alternativement, des fonctions de navigation complexes peuvent être prévues sur le terminal, de sorte à visualiser l'ensemble des données récupérables, mais leur utilisation nécessite un apprentissage et peut engendrer des insatisfactions.

La présente invention vise à résoudre tout ou partie des inconvénients mentionnés ci-dessus.

A cet effet, la présente invention est définie par la revendication 1 et concerne un dispositif de commande et/ou de contrôle d'un élément de confort visuel ou thermique ou de sécurité d'un bâtiment.

Le dispositif de commande et/ou de contrôle est un élément simple. Il est agencé pour recevoir des données, puis pour générer une configuration d'affichage à partir des données représentatives.

Les données de contenu DC correspondent à titre d'exemple des valeurs de grandeurs physiques relatives au confort visuel ou thermique, à la consommation électrique ou la sécurité telles que par exemple une valeur de température ou d'humidité relative, d'ensoleillement, des données historiques relatives à des grandeurs physiques, comme la consommation électrique ou des données relatives au fonctionnement de différents équipements de confort visuel ou thermique ou de sécurité du bâtiment, comme par exemple des états de fonctionnement d'un équipement de chauffage, des états d'ouverture ou de fermeture d'une porte ou d'un portail, etc.

Les données descriptives d'affichages DD définissent le format de représentation de la ou les données de contenu, par exemple sous forme d'histogramme.

Le dispositif de commande et/ou de contrôle agit comme un dispositif d'affichage des données de contenu comprises dans les données représentatives.

Le dispositif ne doit pas réaliser de traitement couteux en énergie car aucun calcul complexe ne doit être réalisé pour l'affichage. Les données descriptives d'affichage contiennent les paramètres nécessaires pour définir l'agencement de l'affichage des données de contenu sur l'écran. Ceci permet de minimiser la consommation d'énergie nécessaire au fonctionnement du dispositif de commande et/ou de contrôle.

Selon un aspect de l'invention, l'unité électronique de contrôle est configurée pour générer une configuration d'affichage en fonction de données caractéristiques de l'écran d'affichage, notamment de données caractéristiques des dimensions de l'écran d'affichage.

Ces dispositions permettent notamment d'adapter l'affichage aux spécificités et au positionnement de l'écran. Ainsi, un écran disposé avec sa plus grande dimension orientée horizontalement doit présenter une configuration d'affichage différente d'un écran dont la plus grande dimension est positionnée verticalement.

Selon un aspect de l'invention, l'orientation de l'écran d'affichage est définie par l'intermédiaire d'un accéléromètre.

Selon un aspect de l'invention, l'unité électronique de contrôle est agencée pour élaborer et transmettre une requête à l'entité centrale via le module de communication, la requête comprenant une demande de mise à jour d'au moins une donnée représentative ou une demande d'action par l'entité centrale.

Dans un souci de limitation de la consommation énergétique du dispositif de commande et/ou de contrôle, il est possible que l'entité centrale n'envoie une donnée représentative que sur demande expresse du dispositif de commande et/ou de contrôle par l'intermédiaire d'une requête.

Le fait de ne fournir des données au dispositif de commande et de contrôle que sur requête participe à la réduction de la consommation énergétique du dispositif de commande et/ou de contrôle, dont le module de communication n'a pas besoin d'être maintenu dans un mode d'écoute de messages.

Selon un aspect de l'invention, il s'agit lors de l'envoi de la requête de demander à l'entité centrale une mise à jour d'au moins une partie des données à afficher. L'entité centrale procède à l'élaboration de la configuration d'affichage des données représentatives en fonction de la requête.

Selon un aspect de l'invention, des requêtes sont émises de manière systématique à des intervalles de temps précis. Ces requêtes peuvent être émises sans intervention d'un utilisateur. La fréquence d'émission de ces requêtes est fournie par l'entité centrale.

Selon un aspect de l'invention, le dispositif de commande et/ou de contrôle comprend en outre un module de saisie et un module de transfert, le module de saisie étant agencé pour détecter une action d'un utilisateur et le module de transfert étant agencé pour transmettre une information saisie correspondante à l'action détectée au module de communication de l'unité électronique de contrôle.

Le module de saisie et le module de transfert constituent une interface pour l'utilisateur qui permet d'utiliser directement le dispositif de commande et/ou de contrôle pour la saisie plutôt que l'entité centrale.

Selon un aspect de l'invention, une requête est émise via le module de communication dès que le module de saisie détecte une action d'un utilisateur.

Le dispositif de commande et/ou de contrôle agit alors comme une unité de commande de l'entité centrale. L'information saisie correspondant à l'action d'un utilisateur est transférée par le dispositif de commande et/ou de contrôle vers l'entité centrale, sans autre analyse. Le fait de transférer simplement l'information saisie participe aussi à la réduction de la consommation énergétique du dispositif de commande et/ou de contrôle, dans la mesure où les ressources de traitement de l'information peuvent être réduites.

Selon un aspect de l'invention, le module de saisie comprend au moins une zone de détection d'un appui mécanique disposée en regard de l'écran, la zone de détection étant agencée pour détecter un appui sur l'écran.

Cette disposition donne une impression d'un écran tactile à retour instantané. En réalité l'information saisie est transférée à l'entité centrale et l'affichage en retour est celui des données de contenu d'une donnée représentative en provenance de l'entité centrale.

Selon un aspect de l'invention, le module de saisie comprend un interrupteur mécanique. Selon un autre aspect de l'invention, l'unité de contrôle comprend un substrat de circuit imprimé sur lequel est disposé le module de saisie pourvu d'un dôme tactile.

Selon un aspect de l'invention, l'écran comprend un élément d'affichage bistable, notamment un élément d'affichage à encre électronique.

L'utilisation d'un élément d'affichage bistable, notamment un élément d'affichage à encre électronique permet une faible consommation d'énergie. Selon un aspect de l'invention l'affichage est bistable, c'est-à-dire que l'affichage ne peut être modifié que si un nouveau contenu est affiché.

Selon un aspect de l'invention, le module de communication comprend un organe passif agencé pour être détecté et identifié selon un protocole de communication en champ proche.

Cette disposition permet un appairage du dispositif de commande et/ou de contrôle avec l'entité centrale par exemple. En effet, les données représentatives identifiées par le dispositif de commande et/ou de contrôle ont été élaborées pour un dispositif de commande et/ou de contrôle particulier. Cet appairage est nécessaire pour établir la communication entre l'entité centrale et le dispositif de commande et/ou de contrôle. Aucun autre appairage du dispositif de commande et/ou de contrôle, notamment avec un autre équipement de l'installation, n'est alors nécessaire.

Selon une autre possibilité, un utilisateur disposant d'un terminal de communication portable agencé pour communiquer selon le protocole de communication en champ proche, tel qu'un téléphone, est également apte à détecter et identifier l'organe passif. L'appairage peut donc aussi être réalisé par l'intermédiaire d'un terminal également agencé pour communiquer avec l'entité centrale.

Selon un aspect de l'invention, l'unité électronique de contrôle est configurée pour présenter un premier de mode de fonctionnement, dans lequel une mise à jour des données représentatives, complète ou partielle, est réalisée selon une première fréquence de rafraîchissement, et un second mode de fonctionnement, dans lequel une mise à jour des données représentatives est réalisée selon une deuxième fréquence de rafraichissement supérieure à la première fréquence de rafraîchissement.

Le premier mode de fonctionnement correspond à un mode de fonctionnement normal, dans lequel la première fréquence de rafraîchissement correspond par exemple à un intervalle de rafraîchissement l'ordre de plusieurs minutes, en particulier de 10 min. En particulier, ces rafraîchissements périodiques sont réalisés sur requête du dispositif, pour éviter d'avoir à scruter en permanence l'arrivée d'un message. Le second mode de fonctionnement correspond notamment à un mode de fonctionnement de démarrage. Il peut être prévu une deuxième fréquence de rafraichissement plus importante afin de permettre une réponse plus rapide de l'affichage lors de la prise en main de l'afficheur par l'utilisateur. A titre d'exemple, la seconde fréquence de rafraîchissement peut correspondre à un intervalle de rafraichissement inférieur à 1 s et notamment de l'ordre de quelques centaines de ms, Le second mode de fonctionnement de démarrage peut être initialisé à l'initiative de l'entité centrale. Le passage du second mode de fonctionnement de démarrage vers le premier mode de fonctionnement dit normal peut être déclenché par exemple à la fin d'une durée prédéterminée.

La présente invention concerne également un système de commande et/ou de contrôle d'au moins un élément de confort visuel ou thermique ou de sécurité du bâtiment comprenant au moins un élément du confort visuel ou thermique ou de sécurité, notamment un actionneur d'un équipement mobile du bâtiment, un capteur de mesure d'une grandeur physique ou tout autre élément relatif au confort visuel ou thermique ou à la sécurité du bâtiment.

Le système comprend une entité centrale agencée pour commander et/ou contrôler l'au moins un élément de confort visuel ou thermique ou de sécurité.

Le système comprend un dispositif de commande et/ou de contrôle tel que décrit précédemment, agencé pour recevoir des données, selon un protocole de communication sans fil, en provenance d'un module de communication complémentaire d'une entité centrale.

Selon un aspect de l'invention, l'entité centrale est agencée pour recevoir selon un premier format des informations en provenance d'un réseau étendu, notamment Internet.

Cette disposition permet de transférer des informations disponibles dans le réseau étendu sur le dispositif de commande et/ou de contrôle, l'entité centrale se chargeant de la création des données descriptives d'affichages relatives au format des informations à afficher.

De préférence, l'entité centrale est agencée pour recevoir selon un second format des informations en provenance d'une unité d'émission locale agencée pour émettre dans une portée d'action déterminée dans laquelle est située l'entité centrale.

Ainsi l'entité centrale reçoit et traduit des informations reçues localement lorsqu'elle est située dans la portée d'action de l'unité d'émission locale. L'entité centrale peut également être agencée pour sélectionner les informations à afficher parmi les informations en provenance du réseau étendu et/ou de l'unité d'émission locale.

Selon un aspect de l'invention, l'unité d'émission locale est agencée pour émettre des informations par ondes radio, de préférence selon un protocole radio classique, par exemple en modulation de fréquence et/ou un protocole de type « long range » ou « LoRa » permettant une transmission de données dans un rayon de quelques kilomètres.

Contrairement aux informations en provenance du réseau étendu, les informations en provenance de l'unité d'émission locale peuvent correspondre à des informations utiles pour les personnes qui sont situées dans la portée d'action.

Ainsi la formation d'un bouchon sur une route en travaux, un rappel d'une réunion organisée pour les habitants d'un immeuble sont des exemples d'informations locales intéressant les personnes qui sont dans la portée d'action.

Selon un aspect de l'invention, l'entité centrale comprend un émetteur/récepteur agencé pour détecter et identifier un organe passif d'un dispositif de commande et/ou de contrôle.

La présente invention concerne en outre un procédé de commande et/ou de contrôle d'au moins un élément de confort visuel ou thermique ou de sécurité du bâtiment défini par la revendication 10.

Selon un aspect de l'invention, le procédé comprend en outre une étape consistant à envoyer une requête à destination de l'entité centrale, ladite requête comprenant une demande de mise à jour d'au moins une donnée représentative à afficher et/ou une demande d'action par l'entité centrale, telle qu'un ordre de commande d'un actionneur ou un ordre de lancement d'un scénario de pilotage d'équipement de confort visuel ou thermique ou de sécurité.

Cette disposition permet d'utiliser le dispositif de commande et/ou de contrôle comme commande déportée de l'entité centrale. Le dispositif de commande et/ou de contrôle se limite à transférer ladite requête vers l'entité centrale. Seule l'entité centrale procède au traitement de la requête.

Selon un aspect de l'invention, le procédé comprend préalablement une étape d'appairage entre le dispositif de commande et/ou de contrôle et l'entité centrale.

Selon un aspect de l'invention, l'étape d'appairage comprend une identification du dispositif de commande et/ou de contrôle consistant à détecter et à identifier un organe passif dudit dispositif selon un protocole de communication en champ proche.

De toute façon l'invention sera bien comprise à l'aide de la description qui suit en référence aux dessins schématiques annexés représentant, à titre d'exemple non limitatif, une forme d'exécution de ce dispositif et ce système de commande et/ou de contrôle.
Figure 1 est une vue schématique d'un bâtiment et de son environnement comprenant un système de commande et/ou de contrôle.
Figure 2 est un schéma synoptique du système de commande et/ou de contrôle.
Figure 3a et 3b sont des schémas de deux configurations d'affichage selon deux orientations d'un écran d'affichage.
Figure 4 est une vue en perspective du dispositif de commande et/ou de contrôle.
Figure 5 est une vue perspective de l'intérieur du dispositif de commande et/ou de contrôle.
Figures 6 à 8 sont des vues éclatées du dispositif de commande et/ou de contrôle.
Figure 9 est un ordinogramme des étapes d'un procédé de commande et/ou de contrôle.

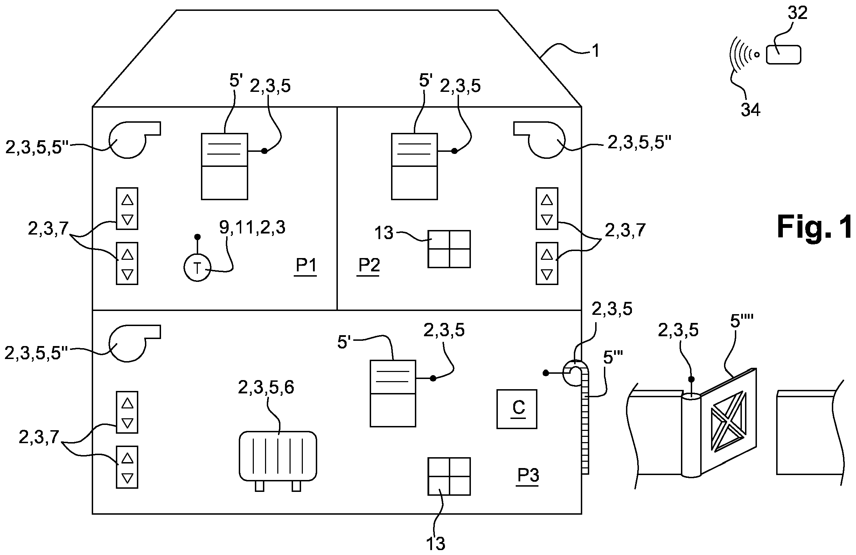

Comme illustré à la figure 1, un bâtiment 1 comprend plusieurs pièces P1, P2, P3 et un système de commande et/ou de contrôle 2 d'une pluralité d'éléments 3 de confort visuel ou thermique ou de sécurité du bâtiment 1 et de son environnement.

Les éléments 3 du confort visuel ou thermique ou de sécurité sont, dans le mode de réalisation présenté des actionneurs 5, des points de commande 7 desdits actionneurs 5 ou des capteurs 9. Ces éléments font partie d'une installation domotique.

Dans le présent texte, le terme actionneur 5 se réfère à un dispositif permettant d'agir sur un équipement d'un bâtiment, tel qu'un volet, un portail, une porte de garage, un chauffage, un luminaire, un appareil de climatisation pour modifier son état, de manière électrique et/ou mécanique. L'actionneur comprend un récepteur de commande lui permettant de recevoir un ordre de commande automatique ou manuel, par exemple, issu d'un capteur ou d'une commande utilisateur.

Selon un exemple, un actionneur peut comprendre un moteur électrique agencé pour l'ouverture et la fermeture d'un équipement mobile 5' du bâtiment tel qu'un volet ou une fenêtre, l'ordre de commande correspondant à une consigne de fonctionnement dudit volet ou de ladite fenêtre, par exemple un ordre de changement de position ou d'état. Selon un autre exemple, un actionneur 5 peut comprendre un appareil aéraulique 5". De manière analogue, un actionneur peut comprendre un moteur électrique, un vérin pneumatique ou hydraulique, une résistance chauffante ou chauffage 6, une lampe ou un électroaimant. Selon d'autres exemple, un actionneur peut comprendre un moteur de porte de garage 5'" ou encore un moteur de portail 5"".

Chaque point de commande 7 est agencé pour émettre à destination d'au moins un actionneur 5 un ordre de commande suite à une action utilisateur sur le point de commande ou suite à la détection d'un passage d'un seuil prédéterminé d'une grandeur physique mesurée par le point de commande ou par un capteur associé à ce point de commande. Un ordre de commande correspond à une consigne de fonctionnement dudit actionneur 5. L'actionneur associé ou appairé au point de commande d'où provient l'ordre de commande et réceptionnant cet ordre de commande réagit en modifiant son état ou sa position d'utilisation.

Il apparait ainsi qu'un actionneur 5 et un point de commande 7 associés sont aptes à fonctionner indépendamment des autres actionneurs 5.

Dans le présent texte, le terme capteur 9 se réfère à un dispositif de mesure d'une grandeur physique, par exemple une grandeur relative à un paramètre physique environnant, comme un capteur de température 11.

Le système de commande et/ou de contrôle 2 comprend également une entité centrale C agencée pour échanger des données avec les éléments 3 de confort visuel ou thermique ou de sécurité selon un protocole de communication sans fil. Dans le mode de réalisation présenté le protocole utilisé est un protocole de communication par ondes radio, notamment bidirectionnel.

L'entité centrale C comprend une unité de traitement agencée pour recueillir et traiter les données en provenance des éléments 3 de confort visuel ou thermique ou de sécurité. Les données recueillies correspondent à des mesures de valeurs physiques, en provenance des capteurs 9, d'ordres de commande d'actionneur 5 en provenance des points de commande 7. Il peut également s'agir d'informations de confirmation, en provenance d'actionneurs 5 suite à un ordre de commande, lesdites informations de retour signalant la réception de l'ordre de commande et/ou l'état ou la position de fonctionnement de l'actionneur 5 atteinte en réponse à l'ordre de commande. Il peut également s'agir d'un ordre de commande d'un utilisateur saisi au niveau de l'entité centrale C, l'ordre de commande consistant par exemple à fermer un volet.

L'unité de traitement est agencée pour, en fonction des données dont elle dispose, élaborer des ordres de commande ou de contrôle à destination des éléments 3 de confort visuel ou thermique ou de sécurité. Ainsi, bien que chaque point de commande 7 est apte à fonctionner indépendamment, l'entité centrale C agit comme un système de commande et de contrôle global dans le but d'assurer une cohérence à l'ensemble des ordres de commande du bâtiment. Cette cohérence peut être assurée en proposant à l'utilisateur différents scénarii de pilotage des éléments de confort visuel ou thermique ou de sécurité, un scénario pouvant être « je quitte la maison » ou «je ferme les volets à la tombée de la nuit ». Pour cela, l'entité centrale stocke des informations concernant les différents éléments de confort visuel ou thermique ou de sécurité du bâtiment, ainsi que des liens d'appairage avec ces éléments et avec le système de commande et/ou de contrôle.

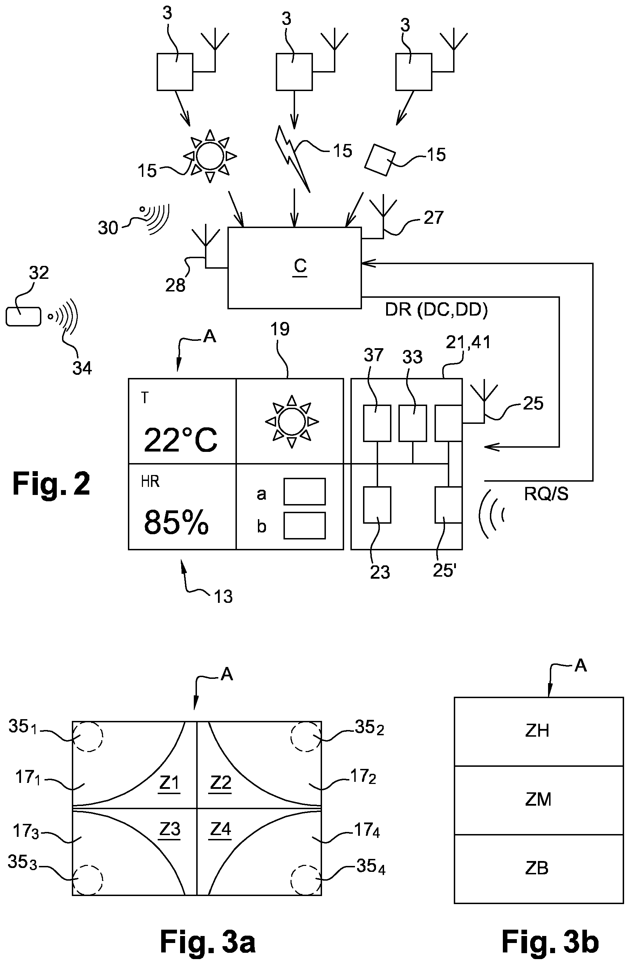

En outre, comme illustré à la figure 2, l'entité centrale C comprend un module de communication 28 qui est agencé pour recevoir des informations ou des données selon un mode de communication sans fil.

Le module de communication 28 est agencé pour recevoir selon un premier format des informations en provenance d'un réseau étendu 30. Ce réseau étendu 30 peut correspondre à Internet et peut être accessible dans le bâtiment par le wifi.

Le module de communication 28 est également agencé pour recevoir selon un second format des informations en provenance d'une unité d'émission locale 32 émettant dans une portée d'action déterminée.

L'entité centrale C est située dans la portée d'action déterminée. L'unité d'émission locale 32 est agencée pour émettre des informations et les transmettre selon un protocole de communication par ondes radio 34 de type « long range ».

Ces informations ou données reçues en provenance du réseau étendu 30 et en provenance de l'unité d'émission locale 32 sont transmises à l'unité de traitement de l'entité centrale C. Le système de commande et/ou de contrôle 2 comprend en outre au moins un dispositif de commande et/ou de contrôle 13. Le dispositif de commande et/ou de contrôle 13 est agencé pour afficher des informations relatives au système de commande et/ou de contrôle 2 et également pour transmettre des requêtes à destination de l'entité centrale C, comme expliqué ci-dessous.

A la figure 2, on a représenté les données reçues 15 par l'entité centrale C en provenance des éléments 3 de confort visuel ou thermique ou de sécurité, notamment des données de capteurs de luminosité, des ordres de commande et des informations de retour d'actionneurs 5. On a également représenté des données représentatives DR relatives au confort visuel ou thermique, à la consommation électrique ou sécurité échangées entre l'entité centrale et les dispositifs de commande et/ou de contrôle, le protocole de communication utilisé étant le protocole de communication radio.

Le dispositif de commande et/ou de contrôle 13 comprend un écran 19 et une unité électronique de contrôle 21, l'unité électronique de contrôle 21 étant agencée pour échanger des données avec l'entité centrale C. Le dispositif de commande et/ou de contrôle 13 comprend un module d'alimentation 23 pourvu de piles.

La configuration d'affichage A visible sur la figure 2 est simple et présente les données de contenu DC sous forme de texte et/ou de symboles. Selon l'exemple présenté, la configuration d'affichage A est répartie en plusieurs zones distinctes. Le nombre de ces zones peut être bien entendu variable.

Selon un exemple de réalisation, l'écran 19 est agencé pour fonctionner avec de l'encre électronique. L'avantage de l'encre électronique est de permettre un affichage bistable : une fois qu'un contenu est affiché, il reste affiché, même en l'absence d'alimentation électrique par le module d'alimentation 23. Selon d'autres modes de réalisation, d'autres types d'affichages bistables peuvent être utilisés, par exemple utilisant des micro-systèmes électromécaniques (MEMS en anglais), basés sur des modulations d'interférences (IMoD en anglais).

L'unité électronique de contrôle 21 comprend un module de communication 25 agencé pour échanger des données avec un module de communication complémentaire 27 de l'entité centrale C selon un protocole de communication par ondes radio. En pratique le module de communication 25 et le module de communication complémentaire 27 comprennent chacun un émetteur-récepteur radio.

Le module de communication 25 comprend en outre un organe passif 25' adapté pour recevoir des données selon un protocole de communication en champ proche. Le module de communication complémentaire 27 comprend quant à elle un émetteur agencé pour communiquer selon ce protocole de communication en champ proche. L'intérêt de disposer de deux modes de communication entre l'entité centrale C et le dispositif de commande et/ou de contrôle 13 sera détaillé plus loin.

L'unité électronique de contrôle 21 est configurée pour générer une configuration d'affichage A en fonction des données de contenu DC et des données descriptives d'affichages DD définissant l'agencement d'un affichage de l'au moins une donnée de contenu DC, l'au moins une donnée de contenu DC et l'au moins une donnée descriptive d'affichage DD étant comprises dans les données représentatives DR relatives au confort visuel ou thermique, à la consommation électrique ou sécurité du bâtiment 1 reçues via le module de communication 25.

L'écran d'affichage 19 est configuré pour afficher ladite configuration d'affichage A.

L'unité électronique de contrôle 21 est également agencée pour élaborer et transmettre une requête RQ à destination de l'entité centrale C. La requête élaborée peut comprendre une demande de mise à jour d'une donnée représentative à afficher.

En pratique l'unité électronique de contrôle est agencée pour demander à l'entité centrale C des mises à jour de contenu à afficher. Cet envoi de mise à jour est réalisé selon les besoins. L'entité centrale C détermine une information de fréquence laquelle est transmise au dispositif de commande et/ou de contrôle : peuvent être pris en compte par exemple l'heure, car il n'est pas nécessaire par exemple de rafraichir trop souvent l'affichage pendant la nuit, ou une information de présence ou absence dans le bâtiment ou son environnement.

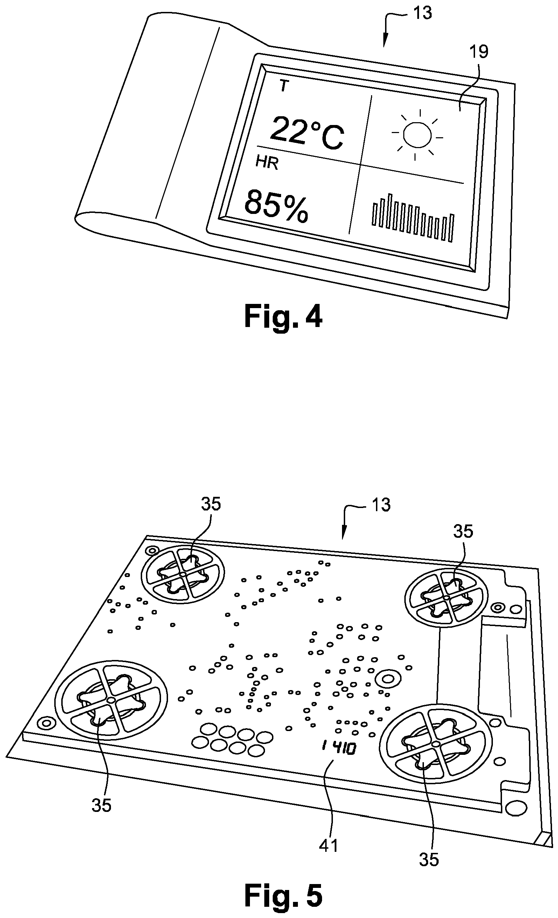

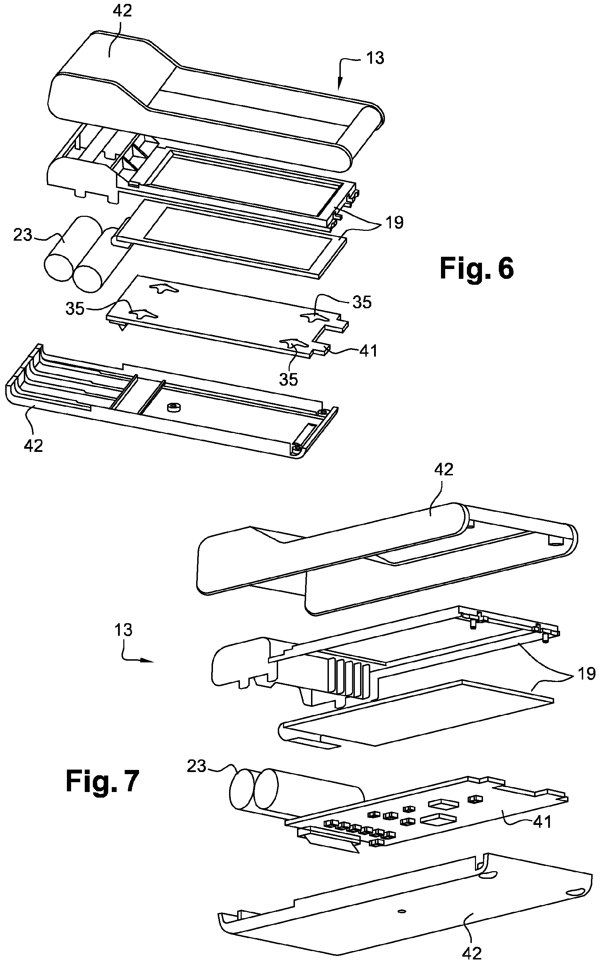

L'unité électronique de contrôle 21 comprend un module de saisie 33 pourvu de plusieurs zones de détection d'appuis. Pour ce faire le module de saisie 33 comprend quatre interrupteurs mécaniques 35 disposés sous l'écran 19, comme illustré aux figures 5 et 6. Les zones correspondent ainsi à des portions de la surface de l'écran : un effet pseudo-tactile est ainsi obtenu. La figure 6 présente l'intérieur du dispositif de commande et/ou de contrôle 13 lorsque l'écran 19 est retiré.

Les interrupteurs mécaniques 35 sont des dômes tactiles montés sur un circuit imprimé 41 en regard de l'écran. Chaque interrupteur mécanique 35 est identifié par une référence. Il est également possible d'appuyer sur deux interrupteurs mécaniques 35 simultanément. Un dôme tactile pourra également être prévu au centre du circuit imprimé.

Selon le mode de réalisation décrit aux figures 5 et 6, quatre interrupteurs 35 sont positionnés aux quatre coins de l'écran, en dessous de celui-ci et il est ainsi possible de détecter des appuis sur les zones 17 situés aux coins de l'écran. Ces zones 17₁, 17₂ 17₃, 17₄, sont illustrées à la figure 3a. Elles sont respectivement disposées au-dessus des quatre interrupteurs 35₁, 35₂ 35₃, 35₄, correspondent sensiblement à quatre zones d'affichage Z1, Z2, Z3, Z4. Le dispositif permet ainsi de détecter un appui de l'utilisateur sur une zone d'affichage d'une configuration d'affichage A donnée.

A la figure 2, l'écran 19 comprend quatre zones présentant des informations différentes : la température instantanée dans une pièce du bâtiment 1, l'humidité relative dans ladite pièce, une information météo et une vue de l'évolution de la température de consigne dans ladite pièce sur vingt-quatre heures.

Les figures 6 à 8 sont des vues éclatées complètes ou partielles du dispositif de commande et/ou de contrôle 13. Comme représenté, le dispositif de commande et/ou de contrôle 13 comprend en outre un boitier 42 composé d'une partie supérieure et d'une partie inférieure.

Comme illustré à la figure 2, l'unité électronique de contrôle 21 comprend un module de transfert 37 agencé pour transmettre les références des interrupteurs mécaniques 35 sur lesquelles l'utilisateur a appuyé. L'unité électronique de contrôle 21 comprend en outre un accéléromètre permettant de détecter si l'écran 19 est positionné plutôt verticalement ou plutôt horizontalement. Par ailleurs, l'unité électronique de contrôle 21 comprend un capteur de mesures physique (non représenté). Les données fournies par ce capteur de mesures physiques peuvent être affichées directement sur l'écran de l'unité électronique de contrôle 21. Elles peuvent également être fournies à l'unité centrale C.

Enfin l'unité électronique de contrôle 21 est agencée pour coordonner le fonctionnement du module de communication 25, du module de saisie 33 et du module de transfert 37. L'unité électronique de contrôle 21 comprend notamment le circuit imprimé 41 mentionné ci-avant, un microprocesseur et une mémoire.

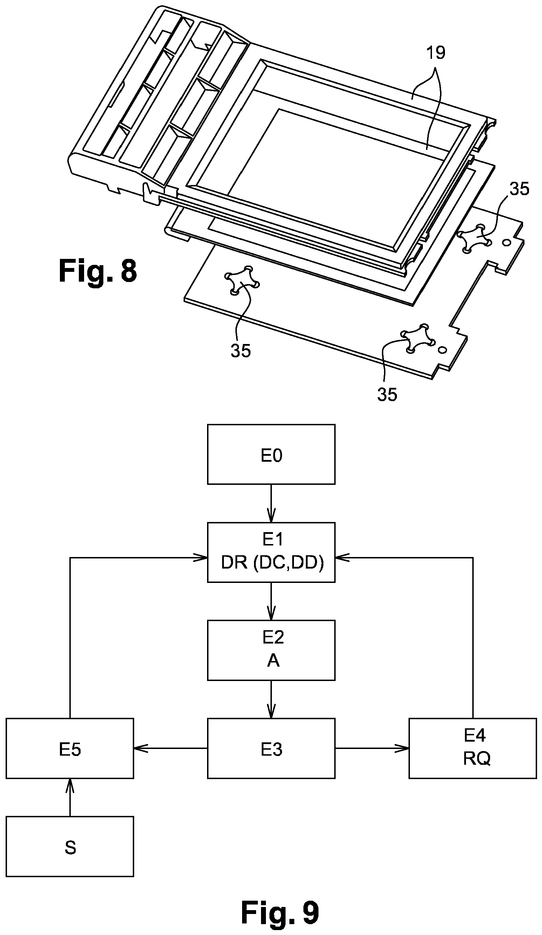

Le fonctionnement et plus particulièrement l'interaction entre l'entité centrale C et le dispositif de commande et/ou de contrôle 13 sont représentés schématiquement selon un ordinogramme détaillant les différentes étapes du procédé de commande et/ou de contrôle à la figure 9.

Une étape préliminaire E0 consiste à appairer le dispositif de commande et/ou de contrôle 13 à l'entité centrale C. L'entité centrale C est agencée pour émettre des données relatives au confort visuel ou thermique, à la consommation électrique ou la sécurité du bâtiment 1. Cependant, tant que l'appairage n'est pas réalisé, l'entité centrale C ne peut envoyer de données représentatives destinées au dispositif de commande et/ou de contrôle 13.

L'appairage consiste donc à mettre en communication le module de communication 25 avec l'élément complémentaire 27 pour que l'entité centrale C identifie le dispositif de commande et/ou de contrôle 13. Cette communication peut être réalisée selon le protocole de communication radio ou en champ proche.

L'avantage du mode communication en champ proche est de pouvoir détecter l'organe passif 25' lorsque celui-ci est à proximité du module de communication complémentaire 27.

Une fois que l'entité centrale C a identifié le dispositif de commande et/ou de contrôle 13, l'étape d'appairage peut optionnellement comprendre une sous-étape de configuration. La configuration consiste pour l'entité centrale C à envoyer des données au module de communication 25 dans le but de paramétrer l'élément de retour d'information 31.

L'élément de retour d'information 31 peut alors être paramétré pour qu'il envoie régulièrement des requêtes pour obtenir certaines informations (température d'une pièce, météo de la journée cours par exemple ou d'autres informations disponibles en provenance du réseau étendu ou de l'unité d'émission locale comme la formation d'un bouchon dû à des travaux à proximité du bâtiment).

Le paramétrage comprend également la définition de la fréquence de rafraichissement de l'affichage. Le rafraichissement peut être plus espacé pendant la nuit. Le paramétrage correspond à l'automatisation de l'envoi de requêtes par l'élément de retour d'information 31.

Selon un exemple de réalisation, dans un premier de mode de fonctionnement normal, un rafraichissement des informations, peut être prévu selon une première fréquence de rafraîchissement, correspondant par exemple à un intervalle de rafraîchissement de 10 min. Ces rafraîchissements périodiques sont réalisés sur requête de l'afficheur, pour éviter d'avoir à scruter en permanence l'arrivée d'un message. Dans un second mode de fonctionnement, correspondant notamment à un mode de fonctionnement de démarrage, il peut être prévu une deuxième fréquence de rafraichissement supérieure à la première fréquence de rafraîchissement, afin de permettre une réponse plus rapide de l'affichage lors de la prise en main de l'afficheur par l'utilisateur. A titre d'exemple, la seconde fréquence de rafraîchissement peut correspondre à un intervalle de rafraichissement inférieur à 1 s et notamment de l'ordre de quelques centaines de ms. Le second mode de fonctionnement de démarrage peut être initialisé à l'initiative de l'entité centrale C, par exemple à la suite de la création d'un nouvel agencement d'interface (layout), ou lors d'une demande de retour d'information. Le passage du second mode de fonctionnement de démarrage vers le premier mode de fonctionnement dit normal peut être déclenché par exemple à la fin d'une durée prédéterminée.

L'étape préliminaire E0 peut n'être réalisée qu'une seule fois lors de la mise en fonctionnement du système de commande /ou de contrôle 2. L'étape préliminaire E0 peut également être réalisée indépendamment des autres étapes du procédé. En effet, un changement de paramétrage est toujours possible. Cette étape peut également être réalisée par un terminal de communication, tel qu'un téléphone, comprenant un émetteur fonctionnant selon le protocole de communication en champ proche. Le terminal doit être au préalable appairé avec l'entité centrale C, de sorte à pouvoir transmettre les informations reçues selon le protocole de communication en champ proche à l'entité centrale. Ainsi, le terminal est utilisé comme intermédiaire : il ne fait que transmettre des données.

Il est également possible de mémoriser un profil de paramétrage dans l'unité de traitement de l'entité centrale et de charger ce profil de paramétrage sur plusieurs dispositifs de commande et/ou de contrôle 13. Pour cette opération, un terminal de communication peut également être utilisé.

La première étape E1 à proprement parler consiste émettre à partir de l'entité centrale C selon le protocole de communication radio des données représentatives à destination du dispositif de commande et/ou de contrôle 13 appairé. Chaque donnée représentative comprend des données de contenu et une information d'affichage.

Les données représentatives peuvent comprendre des informations en provenance des éléments 3 de confort mais également en provenance du réseau étendu 30 et de l'unité d'émission locale 32.

Cette disposition permet de transmettre au dispositif de commande et/ou de contrôle 13 des informations en provenance d'Internet comme la météo et/ou des informations locales comme le rappel d'une réunion de copropriétaires du bâtiment ayant prochainement lieu par l'intermédiaire de l'unité d'émission locale 32.

La seconde étape E2 consiste pour le dispositif de commande et/ou de contrôle 13 à réceptionner via le module de communication 25 la ou les données représentatives envoyées par l'entité centrale C puis à générer une configuration d'affichage A en fonction de l'au moins une donnée de contenu DC et de l'au moins une donnée descriptive d'affichage DD comprises dans les données représentatives DR,

Les données descriptives d'affichage DD détaillent l'agencement de l'affichage : Le traitement des données par le dispositif de commande et/ou de contrôle est donc limité : le dispositif génère les images selon le contenu qu'il reçoit et selon l'agencement spécifié.

Les données de contenu DC correspondent à des éléments simples comme un texte, une valeur numérique ou une référence d'un élément connu de l'unité électronique de contrôle 21. Le contenu correspond par exemple à une valeur de température T ou d'humidité relative HR mesurée dans une pièce, le contenu peut également comprendre le numéro ou le nom a, b d'un scénario.

Dans un mode fonctionnel, les données représentatives DR envoyées ne sont pas des images sous forme d'ensemble de pixels. Si des icônes doivent être utilisées, celles-ci sont stockées localement dans une mémoire de l'unité de contrôle électronique. Les données descriptives d'affichage contiennent dans ce cas une simple référence à l'icône devant être utilisée dans la configuration d'affichage A

A partir des données de contenu DC et des données descriptives d'affichage fournies, le dispositif de commande et/ou de contrôle génère les images correspondant à la configuration d'affichage.

La troisième étape E3 consiste pour le dispositif de commande et/ou de contrôle 13 à afficher sur l'écran 19 les données de contenu DC des données représentatives DR selon la configuration d'affichage A définie.

Il est à remarquer que cette disposition permet d'obtenir une faible consommation d'énergie de la part du dispositif de commande et/ou de contrôle 13. Les données transmises sont de faible taille en comparaison avec des images sous forme d'ensemble de pixels. Il n'est pas nécessaire qu'il comprenne une unité de traitement complexe pour le traitement des données de contenu en vue de l'afficher dans la mesure où l'agencement est également fourni par l'entité centrale.

L'unité électronique de contrôle 21 comprenant l'accéléromètre est toutefois utilisée lors de cette étape pour définir si l'affichage doit être réalisé verticalement ou horizontalement, comme illustré aux figures 3a et 3b. La figure 3a illustre un affichage horizontal à 4 zones Z1, Z2, Z3, Z4 du type de la figure 2. La figure 3b illustre un affichage vertical avec 3 zones haute H, moyenne M et basse B réparties sur la hauteur Dans un tel cas, soit le dispositif de commande et/ou de contrôle requiert une mise à jour de l'agencement et/ou des données de contenu des données représentatives DR à afficher et des informations lors du changement de positionnement, soit les données descriptives d'affichages DD contiennent des données correspondant aux deux formats à chaque requête. Le dispositif de commande et/ou de contrôle sélectionne alors le format applicable lors d'un changement de positionnement vertical ou horizontal de l'écran 19 du dispositif.

La quatrième étape E4 consiste pour le dispositif de commande et/ou de contrôle 13 à envoyer une requête RQ à destination de l'entité centrale C. Comme déjà évoqué, cette requête à pour but de demander à l'entité centrale C d'envoyer au moins une donnée représentative DR mise à jour. Le but de l'envoi de cette requête RQ est donc de rafraichir l'affichage de l'écran 19. Là encore le fait de conditionner le rafraichissement de l'écran 19 à l'émission d'une requête par le dispositif de commande et/ou de contrôle 13 participe à la faible consommation énergétique du dispositif.

La cinquième étape E5 consiste pour le dispositif de commande et/ou de contrôle 13 à détecter une saisie d'un utilisateur S au niveau des zones de saisies et à transférer les références des zones sur lesquelles l'utilisateur a appuyé à l'entité centrale C. Le dispositif de commande et/ou de contrôle 13 ne réalise lors de cette étape aucune analyse de données, il se contente de relayer l'information vers l'entité centrale C. La cinquième étape E5 est optionnelle et peut être réalisée en parallèle des autres étapes.

Le dispositif de commande et/ou de contrôle 13 peut donc agir également comme une commande déportée de l'unité centrale C. Cette commande déportée peut être utilisée pour transmettre un choix de scénario ou l'augmentation/la diminution d'une valeur de consigne de température par exemple. L'utilisateur peut avoir une impression pseudo-tactile toutefois l'ordre de commande de l'utilisateur est analysé seulement par l'entité centrale C.

Il apparait ainsi que le dispositif de commande et/ou de contrôle 13 est un point d'affichage dynamique à moindre coût. Le dispositif de commande et/ou de contrôle 13 informe l'utilisateur et lui permet d'agir sur les autres éléments 3 de confort visuel ou thermique ou de sécurité du bâtiment 1 par l'intermédiaire de l'entité centrale C.

Selon un exemple de réalisation le dispositif de commande et/ou de contrôle 13 est compris dans un boitier 42 sur lequel est rapporté un aimant. Il est ainsi aisé de déplacer le dispositif de commande et/ou de contrôle 13 et de le disposer sur ou contre un élément intérieur du bâtiment 1. Le coût réduit du dispositif de commande et/ou de contrôle 13 permet de prévoir d'utiliser plusieurs dispositifs de commande et/ou de contrôle 13 pour un même bâtiment 1.

Selon un exemple de réalisation non représenté, le dispositif de commande et/ou de contrôle peut également permettre d'afficher un code identifiant un élément de l'installation, tel qu'un code en deux dimensions (code-barres ou QR-code). Ce code peut ensuite être saisi par un lecteur approprié, par exemple un lecteur de code intégré dans un téléphone intelligent ou une tablette.

## Revendications

1. Dispositif de commande et/ou de contrôle (13) d'un élément (3) de confort visuel ou thermique ou de sécurité d'un bâtiment (1), comprenant :
- un écran (19) d'affichage, et
- une unité électronique de contrôle (21) pourvue d'un module de communication (25) agencé pour recevoir des données, selon un protocole de communication sans fil, en provenance d'un module de communication complémentaire (27) d'une entité centrale (C) agencée pour commander et/ou de contrôler l'au moins un élément (3) de confort visuel ou thermique ou de sécurité, ladite entité centrale (C) étant agencée pour disposer et émettre à destination de l'unité électronique de contrôle (21) des données représentatives (DR) relatives au confort visuel ou thermique, à la consommation électrique ou la sécurité du bâtiment,
l'unité électronique de contrôle (21) étant configurée pour générer une configuration d'affichage (A) en fonction d'au moins une donnée de contenu (DC) et des données descriptives d'affichage (DD) définissant l'agencement d'un affichage de l'au moins une donnée de contenu (DC), l'au moins une donnée de contenu (DC) et les données descriptives d'affichage (DD) étant comprises dans les données représentatives (DR) relatives au confort visuel ou thermique, à la consommation électrique ou à la sécurité du bâtiment (1) reçues via le module de communication (25), l'écran d'affichage (19) étant configuré pour afficher ladite configuration d'affichage (A),
les données descriptives d'affichage (DD) comprennent des données définissant l'agencement de la configuration d'affichage (A) et définissant une division de la configuration d'affichage (A) en zones et la ou les données de contenu (DC) à afficher dans chaque zone, un format de représentation de la ou les données de contenu (DC), par exemple sous forme d'affichage numérique, d'icône à sélectionner dans une liste prédéfinie, ou encore de graphique.

2. Dispositif de commande et/ou de contrôle (13) selon la revendication 1, dans lequel l'unité électronique de contrôle (21) est configurée pour générer une configuration d'affichage en fonction de données caractéristiques de l'écran d'affichage (19), notamment de données caractéristiques des dimensions de l'écran d'affichage (19).

3. Dispositif de commande et/ou de contrôle (13) selon l'une des revendications précédentes, dans lequel l'unité électronique de contrôle (21) est agencée pour élaborer et transmettre une requête (RQ) à l'entité centrale (C) via le module de communication (25), la requête comprenant une demande de mise à jour d'au moins une donnée représentative (DR) ou une demande d'action par l'entité centrale.

4. Dispositif de commande et/ou de contrôle (13) selon l'une des revendications précédentes, comprenant en outre un module de saisie (33) et d'un module de transfert (37), le module de saisie (33) étant agencé pour détecter une action d'un utilisateur et le module de transfert (37) étant agencé pour transmettre une information saisie correspondante à l'action détectée au module de communication (25) de l'unité électronique de contrôle (21).

5. Dispositif de commande et/ou de contrôle (13) selon la revendication précédente, dans lequel le module de saisie (33) comprend au moins une zone de détection d'un appui mécanique disposée en regard de l'écran (19), la zone de détection étant agencée pour détecter un appui sur l'écran (19).

6. Dispositif de commande et/ou de contrôle (13) selon l'une des revendications précédentes, dans lequel l'écran (19) comprend un élément d'affichage bistable, notamment un élément d'affichage à encre électronique.

7. Dispositif de commande et/ou de contrôle (13) selon l'une des revendications précédentes, dans lequel le module de communication (25) comprend un organe passif (25') agencé pour être détecté et identifié selon un protocole de communication en champ proche.

8. Dispositif de commande et/ou de contrôle (13) selon l'une des revendications précédentes, dans lequel l'unité électronique de contrôle est configurée pour présenter un premier mode de fonctionnement, dans lequel une mise à jour des données représentatives (DR) est réalisé selon une première fréquence de rafraîchissement, et un second mode de fonctionnement, dans lequel deuxième une mise à jour des données représentatives (DR) est réalisée à une deuxième fréquence de rafraichissement supérieure à la première fréquence de rafraîchissement.

9. Système de commande et/ou de contrôle (2) d'au moins un élément (3) de confort visuel ou thermique ou de sécurité du bâtiment (1) comprenant :
- au moins un élément (3) de confort visuel ou thermique ou de sécurité, notamment un actionneur (5) d'un équipement mobile du bâtiment (5'), un capteur (9) de mesure d'une grandeur physique ou tout autre élément relatif au confort visuel ou thermique ou à la sécurité du bâtiment (1),
- une entité centrale (C) agencée pour commander et/ou contrôler l'au moins un élément (3) de confort visuel ou thermique ou de sécurité,
- un dispositif de commande et/ou de contrôle (13) selon l'une des revendications précédentes, agencé pour recevoir des données, selon un protocole de communication sans fil, en provenance d'un module de communication complémentaire (27) d'une entité centrale (C).

10. Procédé de commande et/ou de contrôle d'au moins un élément (3) de confort visuel ou thermique ou de sécurité du bâtiment, comprenant les étapes consistant à :
- (E1) émettre des données représentatives (DR) relatives au confort thermique ou visuel du bâtiment (1) depuis une entité centrale agencée pour commander et/ou contrôler au moins un élément (3) de confort visuel ou thermique ou de sécurité selon un protocole de communication sans fil, les données représentatives (DR) comprenant au moins une donnée de contenu (DC) et des données descriptives d'affichage (DD) définissant l'agencement d'un affichage de l'au moins une donnée de contenu (DC), les données descriptives d'affichage (DD) comprennent des données définissant l'agencement d'une configuration d'affichage (A) et définissant une division de la configuration d'affichage (A) en zones et la ou les données de contenu (DC) à afficher dans chaque zone, un format de représentation de la ou les données de contenu (DC), par exemple sous forme d'affichage numérique, d'icône à sélectionner dans une liste prédéfinie, ou encore de graphique
- (E2) réceptionner, via un module de communication (25) d'un dispositif de commande et/ou de contrôle, les données représentatives émises par l'entité centrale (C), et générer la configuration d'affichage (A) en fonction de l'au moins une donnée de contenu (DC) et des données descriptives d'affichage (DD) comprises dans les données représentatives (DR),
- (E3) afficher sur un écran (19) du dispositif de commande et/ou de contrôle (13) ladite configuration d'affichage (A).

11. Procédé de commande et/ou de contrôle selon la revendication précédente, comprenant préalablement une étape d'appairage entre le dispositif de commande et/ou de contrôle (13) et l'entité centrale.

12. Procédé de commande et/ou de contrôle selon la revendication précédente, dans lequel, l'étape d'appairage comprend une identification (E0) du dispositif de commande et/ou de contrôle (13) consistant à détecter et à identifier un organe passif (25') dudit dispositif (13) selon un protocole de communication en champ proche.

## Patentansprüche

1. Vorrichtung zum Bedienen und/oder Steuern (13) eines Licht- oder Wärmekomfort- oder Sicherheitselements (3) eines Gebäudes (1), umfassend:
- einen Anzeigebildschirm (19), und
- eine elektronische Steuerungseinheit (21), die mit einem Kommunikationsmodul (25) versehen ist, das dafür eingerichtet ist, Daten gemäß einem Drahtlos-Kommunikationsprotokoll von einem komplementären Kommunikationsmodul (27) einer Zentraleinheit (C) zu empfangen, welche dafür eingerichtet ist, das mindestens eine Licht- oder Wärmekomfort- oder Sicherheitselement (3) zu bedienen und/oder zu steuern, wobei die Zentraleinheit (C) dafür eingerichtet ist, über repräsentative Daten (DR) bezüglich des Licht- oder Wärmekomforts, des Stromverbrauchs oder der Sicherheit des Gebäudes zu verfügen und dieselben an die elektronische Steuerungseinheit (21) zu senden,
wobei die elektronische Steuerungseinheit (21) dafür konfiguriert ist, abhängig von mindestens einem Inhaltsdatenelement (DC) und den Anzeigebeschreibungsdaten (DD), die die Anordnung einer Anzeige des mindestens einen Inhaltsdatenelements (DC) definieren, eine Anzeigekonfiguration (A) zu erzeugen, wobei das mindestens eine Inhaltsdatenelement (DC) und die Anzeigebeschreibungsdaten (DD) in den repräsentativen Daten (DR) bezüglich des Licht- oder Wärmekomforts, des Stromverbrauchs oder der Sicherheit des Gebäudes (1) umfasst sind, die über das Kommunikationsmodul (25) empfangen werden, wobei der Anzeigebildschirm (19) dafür konfiguriert ist, die Anzeigekonfiguration (A) anzuzeigen,
wobei die Anzeigebeschreibungsdaten (DD) Daten umfassen, die die Anordnung der Anzeigekonfiguration (A) definieren, und eine Unterteilung der Anzeigekonfiguration (A) in Zonen und das oder die in jeder Zone anzuzeigenden Inhaltsdatenelemente (DC), ein Darstellungsformat des oder der Inhaltsdatenelemente (DC), zum Beispiel in Form einer digitalen Anzeige, eines aus einer vordefinierten Liste auszuwählenden Symbols, oder auch einer Grafik definieren.

2. Bedien- und/oder Steuerungsvorrichtung (13) nach Anspruch 1, wobei die elektronische Steuerungseinheit (21) dafür konfiguriert ist, eine Anzeigekonfiguration abhängig von charakteristischen Daten des Anzeigebildschirms (19), insbesondere von charakteristischen Daten der Abmessungen des Anzeigebildschirms (19) zu erzeugen.

3. Bedien- und/oder Steuerungsvorrichtung (13) nach einem der vorstehenden Ansprüche, wobei die elektronische Steuerungseinheit (21) dafür eingerichtet ist, eine Anfrage (RQ) zu erstellen und über das Kommunikationsmodul (25) an die Zentraleinheit (C) zu übertragen, wobei die Anfrage eine Aufforderung zur Aktualisierung von mindestens einem repräsentativen Datenelement (DR) oder eine Aufforderung zur Aktion durch die Zentraleinheit umfasst.

4. Bedien- und/oder Steuerungsvorrichtung (13) nach einem der vorstehenden Ansprüche, die weiter ein Erfassungsmodul (33) und ein Transfermodul (37) umfasst, wobei das Erfassungsmodul (33) dafür eingerichtet ist, eine Aktion eines Benutzers zu erkennen, und das Transfermodul (37) dafür eingerichtet ist, eine erfasste Information, die der erkannten Aktion entspricht, an das Kommunikationsmodul (25) der elektronischen Steuerungseinheit (21) zu übertragen.

5. Bedien- und/oder Steuerungsvorrichtung (13) nach dem vorstehenden Anspruch, wobei das Eingabemodul (33) mindestens eine Zone zum Erkennen eines mechanischen Drucks umfasst, die dem Bildschirm (19) zugewandt angeordnet ist, wobei die Erkennungszone dafür eingerichtet ist, einen Druck auf den Bildschirm (19) zu erkennen.

6. Bedien- und/oder Steuerungsvorrichtung (13) nach einem der vorstehenden Ansprüche, wobei der Bildschirm (19) ein bistabiles Anzeigeelement, insbesondere ein Anzeigeelement mit elektronischer Tinte umfasst.

7. Bedien- und/oder Steuerungsvorrichtung (13) nach einem der vorstehenden Ansprüche, wobei das Kommunikationsmodul (25) ein passives Glied (25') umfasst, das dafür eingerichtet ist, gemäß einem Nahfeldkommunikationsprotokoll erkannt und identifiziert zu werden.

8. Bedien- und/oder Steuerungsvorrichtung (13) nach einem der vorstehenden Ansprüche, wobei die elektronische Steuerungseinheit dafür konfiguriert ist, einen ersten Betriebsmodus aufzuweisen, bei dem eine Aktualisierung der repräsentativen Daten (DR) gemäß einer ersten Bildwiederholfrequenz ausgeführt wird, und einen zweiten Betriebsmodus, bei welchem zweiten eine Aktualisierung der repräsentativen Daten (DR) mit einer zweiten Bildwiederholfrequenz ausgeführt wird, die höher ist als die erste Bildwiederholfrequenz.

9. System zum Bedienen und/oder Steuern (2) mindestens eines Licht- oder Wärmekomfort- oder Sicherheitselements (3) des Gebäudes (1), umfassend:
- mindestens ein Licht- oder Wärmekomfort- oder Sicherheitselement (3), insbesondere einen Aktor (5) einer beweglichen Ausrüstung des Gebäudes (5'), einen Sensor (9) zum Messen einer physikalischen Größe, oder jedes andere Element bezüglich des Licht- oder Wärmekomforts oder der Sicherheit des Gebäudes (1),
- eine Zentraleinheit (C), die dafür eingerichtet ist, das mindestens eine Licht- oder Wärmekomfort- oder Sicherheitselement (3) zu bedienen und/oder zu steuern,
- eine Bedien- und/oder Steuerungsvorrichtung (13) nach einem der vorstehenden Ansprüche, die dafür eingerichtet ist, Daten gemäß einem Drahtlos-Kommunikationsprotokoll von einem komplementären Kommunikationsmodul (27) einer Zentraleinheit (C) zu empfangen.

10. Verfahren zum Bedienen und/oder Steuern mindestens eines Licht- oder Wärmekomfort- oder Sicherheitselements (3) des Gebäudes, umfassend die Schritte bestehend im:
- (E1) Senden der repräsentativen Daten (DR) bezüglich des Wärme- oder Lichtkomforts des Gebäudes (1) von einer Zentraleinheit, die dafür eingerichtet ist, mindestens ein Licht- oder Wärmekomfort- oder Sicherheitselement (3) zu bedienen und/oder zu steuern, gemäß einem Drahtlos-Kommunikationsprotokoll, wobei die repräsentativen Daten (DR) mindestens ein Inhaltsdatenelement (DC) und Anzeigebeschreibungsdaten (DD) umfassen, die die Anordnung einer Anzeige des mindestens einen Inhaltsdatenelements (DC) definieren, wobei die Anzeigebeschreibungsdaten (DD) Daten umfassen, die die Anordnung einer Anzeigekonfiguration (A) definieren, und eine Unterteilung der Anzeigekonfiguration (A) in Zonen und das oder die in jeder Zone anzuzeigenden Inhaltsdatenelemente (DC), ein Darstellungsformat des oder der Inhaltsdatenelemente (DC), zum Beispiel in Form einer digitalen Anzeige, eines aus einer vordefinierten Liste auszuwählenden Symbols, oder auch einer Grafik definieren,
- (E2) Empfangen der von der Zentraleinheit (C) gesendeten repräsentativen Daten über ein Kommunikationsmodul (25) einer Bedien- und/oder Steuerungsvorrichtung, und Erzeugen der Anzeigekonfiguration (A) abhängig von dem mindestens einen Inhaltsdatenelement (DC) und den Anzeigebeschreibungsdaten (DD), die in den repräsentativen Daten (DR) umfasst sind,
- (E3) Anzeigen der Anzeigekonfiguration (A) auf einem Bildschirm (19) der Bedien- und/oder Steuerungsvorrichtung (13).

11. Bedien- und/oder Steuerungsverfahren nach dem vorstehenden Anspruch, das zuvor einen Schritt der Paarbildung zwischen der Bedien- und/oder Steuerungsvorrichtung (13) und der Zentraleinheit umfasst.

12. Bedien- und/oder Steuerungsverfahren nach dem vorstehenden Anspruch, wobei der Paarbildungsschritt ein Identifizieren (E0) der Bedien- und/oder Steuerungsvorrichtung (13) umfasst, der darin besteht, ein passives Glied (25') der Vorrichtung (13) gemäß einem Nahfeldkommunikationsprotokoll zu erkennen und zu identifizieren.

## Claims

1. A device for commanding and/or controlling (13) an element (3) for visual or thermal comfort or for security of a building (1), comprising:
- a display screen (19), and
- an electronic control unit (21) provided with a communication module (25) arranged so as to receive data, according to a wireless communication protocol, from a complementary communication module (27) of a central entity (C) arranged so as to command and/or control the at least one element (3) for visual or thermal comfort or for security, said central entity (C) being arranged so as to provide and emit towards the electronic control unit (21) representative data (DR) related to the visual or thermal comfort, to the electrical consumption or to the security of the building,
the electronic control unit (21) being configured to generate a display configuration (A) based on at least one content datum (DC) and display descriptive data (DD) defining the arrangement of a display of the at least one content datum (DC), the at least one content datum (DC) and the display descriptive data (DD) being comprised in the representative data (DR) related to the visual or thermal comfort, to the electrical consumption or to the security of the building (1) received via the communication module (25), the display screen (19) being configured to display said display configuration (A),
the display descriptive data (DD) comprise data defining the arrangement of the display configuration (A) and defining a division of the display configuration (A) into areas and the content datum or data (DC) to be displayed in each area, a representation format of the content datum or data (DC), for example in the form of a numerical display, of an icon to be selected in a predefined list, or still of a graph.

2. The command and/or control device (13) according to claim 1, wherein the electronic control unit (21) is configured to generate a display configuration based on characteristic data of the display screen (19), in particular characteristic data regarding the dimensions of the display screen (19).

3. The command and/or control device (13) according to any of the preceding claims, wherein the electronic control unit (21) is arranged so as to elaborate and transmit a request (RQ) to the central entity (C) via the communication module (25), the request comprising a demand for update of at least one representative datum (DR) or a demand for action by the central entity.

4. The command and/or control device (13) according to any of the preceding claims, further comprising an input module (33) and a transfer module (37), the input module (33) being arranged so as to detect an action of a user and the transfer module (37) being arranged so as to transmit an entered information corresponding to the detected action to the communication module (25) of the electronic control unit (21).

5. The command and/or control device (13) according to the preceding claim, wherein the input module (33) comprises at least one area for detecting a mechanical press disposed facing the screen (19), the detection area being arranged so as to detect a press on the screen (19).

6. The command and/or control device (13) according to any of the preceding claims, wherein the screen (19) comprises a bi-stable display element, in particular an electronic-ink display element.

7. The command and/or control device (13) according to any of the preceding claims, wherein the communication module (25) comprises a passive member (25') arranged so as to be detected and identified according to a near-field communication protocol.

8. The command and/or control device (13) according to any of the preceding claims, wherein the electronic control unit is configured to have a first operating mode, in which an update of the representative data (DR) is carried out according to a first refresh rate, and a second operating mode, in which an update of the representative data (DR) is carried out at a second refresh rate higher than the first refresh rate.

9. A system for commanding and/or controlling (2) at least one element (3) for visual or thermal comfort or for security of a building (1) comprising:
- at least one element (3) for visual or thermal comfort or for security, in particular an actuator (5) of a mobile equipment of the building (5'), a sensor (9) for measuring a physical quantity or any other element related to the visual or thermal comfort or to the security of the building (1),
- a central entity (C) arranged so as to command and/or control the at least one element (3) for visual or thermal comfort or for security,
- a command and/or control device (13) according to any of the preceding claims, arranged so as to receive data, according to a wireless communication protocol, from a complementary communication module (27) of a central entity (C).

10. A method for commanding and/or controlling at least one element (3) for visual or thermal comfort or for security of a building, comprising the steps consisting in:
- (E1) emitting representative data (DR) related to the thermal or visual comfort of the building (1) from a central entity arranged so as to command and/or control at least one element (3) for visual or thermal comfort or for security according to a wireless communication protocol, the representative data (DR) comprising at least one content datum (DC) and display descriptive data (DD) defining the arrangement of a display of the at least one content datum (DC), the display descriptive data (DD) comprise data defining the arrangement of a display configuration (A) and defining a division of the display configuration (A) into areas and the content datum or data (DC) to be displayed in each area, a representation format of the content datum or data (DC), for example in the form of a numerical display, of an icon to be selected in a predefined list, or still of a graph
- (E2) receiving, via a communication module (25) of a command and/or control device, the representative data emitted by the central entity (C), and generating the display configuration (A) based on the at least one content datum (DC) and the display descriptive data (DD) comprised in the representative data (DR),
- (E3) displaying said display configuration (A) on a screen (19) of the command and/or control device (13).

11. The command and/or control method according to the preceding claim, comprising a preliminary step of pairing between the command and/or control device (13) and the central entity.

12. The command and/or control method according to the preceding claim, wherein, the pairing step comprises an identification (E0) of the command and/or control device (13) consisting in detecting and identifying a passive member (25') of said device (13) according to a near-field communication protocol.
